# DEMANDE DE BREVET EUROPEEN

(11) **EP 1 601 190 A2**
(43) Date de publication de la demande: **30.11.2005**
(21) Numéro de dépôt: 05358005.6
(22) Date de dépôt: 25.05.2005
(51) Int. Cl.: H04N 5/232

(54) **Dispositif d'acquisition d'images**

(30) Priorité: 28.05.2004 FR 0405817
(71) Demandeur: Digital Video Sud, 13858 Aix en Provence Cedex 03 (FR)
(72) Inventeur: Novoyan, Aram, 05200 Embrun (FR)
(74) Mandataire: Domange, Maxime

(57) **Abrégé**

Ce dispositif d'acquisition d'images comporte une caméra (110) de type CMOS, un objectif à focale variable, et des moyens (130) de commande motorisés et déportés, pour faire varier la focale. La caméra (110) permet d'acquérir, lesdites images à une vitesse supérieure à soixante-quinze images par seconde.

Utilisation pour créer des ralentis diffusés dans les conditions du direct télévisé.

## Description

La présente invention concerne un dispositif d'acquisition d'images pouvant notamment être utilisé pour créer des ralentis de séquences d'images d'excellente qualité, et pouvant être diffusées dans les conditions du direct.

L'invention permet notamment d'obtenir des ralentis comportant cinq cent images par seconde, et la diffusion de ces ralentis immédiatement après leur acquisition.

Elle procure donc un avantage considérable par rapport à toutes les solutions existantes de production de ralentis en direct, limités, à ce jour à soixante-quinze images par seconde.

L'invention trouvera en conséquence une utilisation privilégiée dans le domaine de la retransmission d'événements sportifs en direct, notamment pour le contrôle vidéo temps réel au support de l'arbitrage.

De façon connue, les caméras de ralentis traditionnellement utilisées pour la retransmission d'événements sportifs en direct utilisent des capteurs à transfert de charge, ci-après « CCD » (pour Charged Coupled Device en anglais).

Au maximum des performances connues, ces caméras CCD ne permettent, que l'acquisition de soixante-quinze images par seconde.

L'invention vise à résoudre les problèmes précités.

A cet effet, et selon un premier aspect, elle concerne un dispositif d'acquisition d'images comportant :
- une caméra de type CMOS, adaptée à acquérir, les images à une vitesse supérieure à soixante-quinze images par seconde.;
- un objectif à focale variable ; et
- des moyens de commande, pour faire varier la focale, motorisés, déportés, et accessibles au caméraman qui manipule la caméra.

Ce dispositif étant notamment destiné à la retransmission d'événements sportifs, il est essentiel qu'il comporte un objectif à focale variable et les moyens précités de commande motorisés et déportés pour faire varier cette focale.

Ces moyens de commande déportés sont traditionnellement accessibles via un pupitre ou par les poignées d'un siège en rotation, dit « tournette » sur lequel est installé le cameraman.

Avantageusement, les caméras de type CMOS ont une capacité d'acquisition bien supérieure à soixante-quinze images par seconde, cette capacité pouvant même atteindre des vitesses d'acquisition de plusieurs centaines d'images par seconde.

Mais, jusqu'à l'invention, les caméras de type CMOS n'avaient jamais été utilisées dans un dispositif d'acquisition comportant un objectif à focale variable et des moyens de commande motorisés et déportés pour faire varier cette focale.

En effet, les caméras de type CMOS connues à ce jour ne sont prévues que pour fonctionner avec des objectifs photos, à monture de type « F » ou « C » connue de l'homme du métier.

Cette constatation s'explique notamment par le fait, que les caméras de type CMOS, ont été conçues pour des applications de photographie dans les domaines industriels et scientifiques.

Il était donc inconcevable, avant l'invention, d'utiliser un objectif à focale variable sur une caméra de type CMOS, avec des moyens de commande déportés et motorisés.

Ce préjugé a été vaincu par la Demanderesse, qui a démontré l'application concrète du dispositif d'acquisition, objet de la présente demande, notamment pour l'acquisition ultra rapide d'images dans le but de créer des ralentis dans les conditions du direct télévisé.

Et la performance obtenue dans ce domaine, à savoir l'obtention de ralentis de cinq cent images par seconde au lieu des soixante-quinze images par secondes traditionnelles soulignent les avantages techniques importants obtenus grâce à l'invention.

Dans un mode préféré de réalisation, le dispositif d'acquisition selon l'invention comporte en outre des moyens d'adaptation optique et mécanique entre l'objectif à focale variable et la caméra.

Ces moyens d'adaptation permettent notamment d'utiliser toute la surface du capteur CMOS.

Selon un deuxième aspect, l'invention concerne un dispositif de traitement d'images comportant :
- un dispositif d'acquisition tel que décrit brièvement ci-dessus; et
- des moyens de téléchargement, à partir de la caméra, de fichiers correspondant à une séquence d'images, vers une unité de stockage.

L'unité de stockage peut notamment être constituée par un serveur de fichiers.

Ce téléchargement peut être effectué depuis une mémoire tampon de la caméra, ou directement (on pare alors de « direct streaming »).

Ce dispositif de traitement permet ainsi le téléchargement, par exemple dans un véhicule placé à distance de la caméra, d'une séquence d'images obtenue avec une très grande vitesse d'acquisition, en vue de son archivage ou de son traitement par un opérateur avant diffusion.

Dans une première variante de réalisation, ces moyens de téléchargement comportent une fibre optique.

Cette première variante permet ainsi d'éloigner l'unité de stockage de plus de deux mille mètres par rapport à la caméra.

Dans une deuxième variante de réalisation, les moyens de téléchargement utilisent un câble de type RJ45 plus robuste que la fibre optique.

Préférentiellement, le dispositif de traitement d'images selon l'invention comporte des moyens distants de contrôle et de commande du dispositif d'acquisition d'images, depuis l'unité de stockage, et plus précisément :
- des moyens de visualisation, au format PAL, des images acquises par la caméra ;
- un canal de communication pour le caméraman situé à proximité de cette caméra ;
- des moyens pour commencer, arrêter, suspendre ou reprendre l'acquisition des images à distance ; et
- des moyens de contrôle de l'ouverture du diaphragme de la caméra.

Un opérateur situé à proximité de l'unité de stockage peut ainsi visualiser, au format PAL, les images filmées par la caméra, décider ou non de leur téléchargement, et agir directement et à distance sur certains paramètres d'acquisition, comme l'ouverture du diaphragme par exemple.

Il peut aussi donner des instructions à l'opérateur situé à proximité de la caméra, via le canal de communication précité.

Préférentiellement, l'unité de stockage comporte des moyens adaptés à convertir lesdits fichiers en données conforme à un format standard, et notamment au format DVI, HD, SDI ou PAL.

Cette conversion permet ainsi d'obtenir des données dans un format compatible avec des équipements de traitement ou de diffusion d'images, utilisant le même format standard.

Préférentiellement, ces moyens de conversion sont constitués par :
- une carte vidéo pour convertir les fichiers en données au format DVI ;et
- un convertisseur pour convertir les données du format DVI au SDI ou HD.

Préférentiellement, le dispositif de traitement d'images selon l'invention comporte en outre des moyens de correction de colorimétrie.

Ces moyens permettent ainsi à un opérateur d'ajuster la colorimétrie d'une image ou d'une séquence d'images avant sa diffusion, notamment pour garantir que des images acquises par différentes caméras, aient le même aspect visuel.

Selon un troisième aspect, l'invention concerne aussi un dispositif de diffusion d'images comportant :
- un dispositif de traitement d'images tel que décrit brièvement ci-dessus ; et
- des moyens de diffusion desdites au format SDI ou HD.

Le dispositif de diffusion d'images, objet de la présente invention permet ainsi la diffusion de ralentis de séquences d'images d'excellente qualité, par exemple comportant cinq cent images par seconde.

Préférentiellement, le dispositif de diffusion d'images selon l'invention comporte en outre un serveur vidéo pour l'archivage desdites données au format SDI ou HD, et leur relecture, préférentiellement à vitesse variable.

Cette caractéristique permet ainsi avantageusement d'accélérer ou ralentir la diffusion du ralenti en fonction des contraintes du direct télévisé.

D'autres aspects et avantages de la présente invention apparaîtront plus clairement à la lecture de la description de modes particuliers de réalisation qui va suivre, cette description étant donnée uniquement à titre d'exemple non limitatif et faite en référence aux dessins annexés sur lesquels :
- la figure 1 représente un dispositif de diffusion d'images conforme à l'invention, dans un mode préféré de réalisation ; et
- la figure 2 représente un adaptateur utilisé dans un dispositif d'acquisition d'images conforme à l'invention.

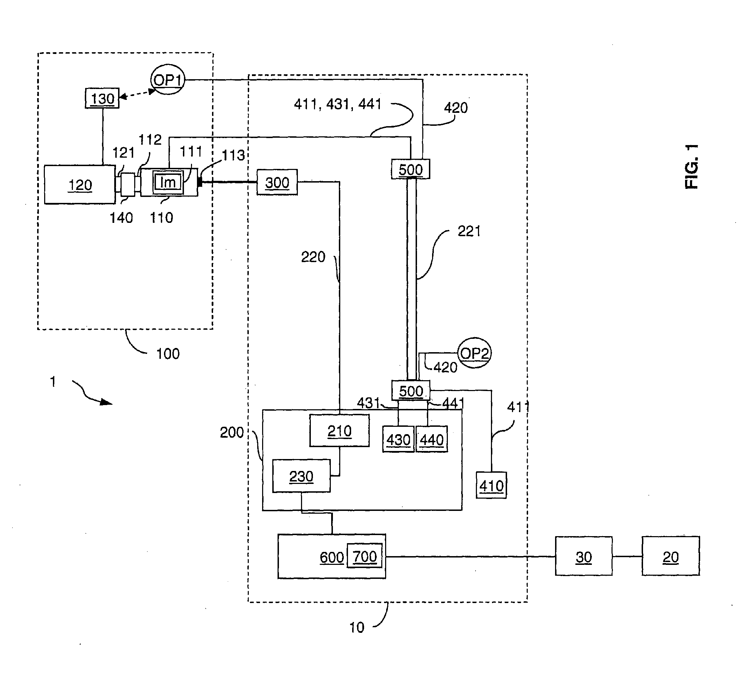

La figure 1 représente un dispositif 1 de diffusion d'images conforme à l'invention dans un mode préféré de réalisation.

Ce dispositif 1 de diffusion d'images comporte un dispositif 10 de traitement d'images conforme à la présente invention.

Le dispositif 10 de traitement d'images comporte un dispositif 100 d'acquisition d'images conforme à la présente invention.

Le dispositif 100 d'acquisition d'images comporte :
- une caméra 110 de type CMOS ; et
- un objectif 120 à focale variable.

On supposera par la suite que ce dispositif 100 est utilisé par un caméraman OP1 situé à proximité.

Dans le mode préféré de réalisation décrit ici, la caméra 110 est constituée par la caméra commercialisée par la société PHOTO-SONICS INTERNATIONAL Ltd sous la référence « Phantom v7.0 ».

Cette caméra comporte des moyens de commande 130 pour faire varier la focale, ces moyens de commande 130 étant motorisés, déportés, et accessibles au caméraman OP1.

Elle permet l'acquisition continue de cinq cent images par seconde dans une mémoire vive 111 de la caméra 110.

Dans le mode de réalisation décrit ici, la mémoire vive 111 de la caméra 110 possède une capacité de huit Gigaoctets.

Dans le mode préféré de réalisation décrit ici, chaque image Im acquise par la caméra 110 est mémorisée dans la mémoire vive 111, sous forme d'un fichier informatique F.

En variante, un fichier F pourrait mémoriser une séquence d'images. Le format des fichiers informatiques F, peut être d'un type quelconque.

Dans le mode préféré de réalisation décrit ici, le format de ces fichiers est propre à la caméra 110. Il porte l'extension « .cin »

De façon connue, la caméra 110 comporte une bague 112 pour la fixation d'un objectif.

Dans le mode préféré de réalisation décrit ici, cette bague 112 est adaptée aux formats « C » et « F » connus de l'homme du métier.

Dans le mode préféré de réalisation décrit ici, l'objectif 120 est constitué par le zoom commercialisé par la société Canon sous la référence « DIGI SUPER 86 XS ». Il s'agit d'un objectif comportant 600*800 pixels carrés de vingt-deux microns de côtés.

Dans le mode de réalisation décrit ici, l'objectif 120, comporte une monture 121 conforme au format B4 connu de l'homme du métier. Il ne peut donc être directement monté sur la bague 112 de la caméra 110.

A cet effet, le dispositif d'acquisition 100 comporte un adaptateur optique et mécanique 140 adapté :
- d'une part à permettre la fixation de l'objectif 120 sur la caméra 110 ; et
- d'autre part, à rendre compatible le flux de rayon lumineux rentrant dans l'objectif 120 avec toute la surface du capteur CMOS.

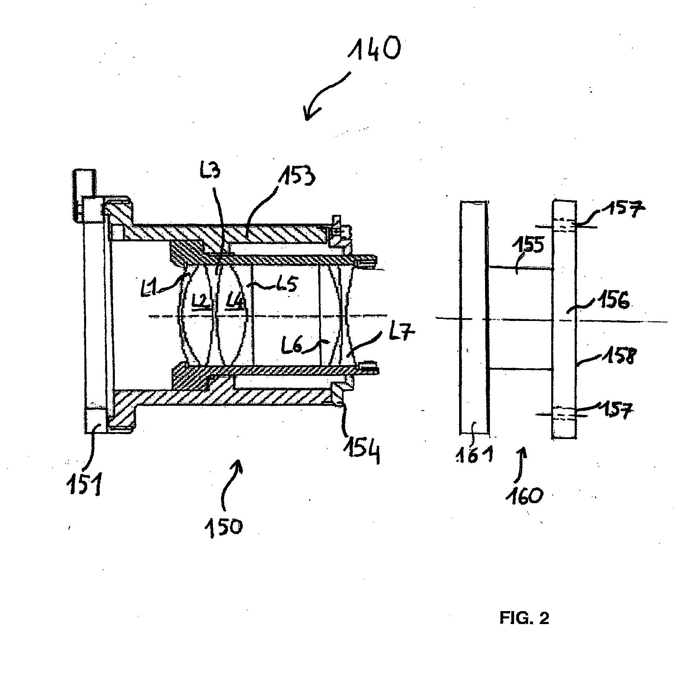

L'adaptateur 140 sera décrit ultérieurement en référence à la figure 2.

Bien entendu, l'homme du métier comprendra que l'adaptateur 140 n'est pas nécessaire si l'on utilise, dans un autre mode de réalisation de l'invention, une caméra 110 dont la bague 112 est compatible avec la monture 121 de l'objectif à focale variable.

Conformément à l'invention, le dispositif 10 de traitement d'images comporte une unité 200 de stockage d'images Im.

Dans le mode préféré de réalisation décrit ici, l'unité 200 de stockage est constituée par un ordinateur personnel (Personal Computer, « PC », en anglais) industriel, comportant une DDRAM de 2 Gigabits, et un disque dur du type « 2x73 Gb ultra fast SCSI »..

Conformément à l'invention, le dispositif 200 de traitement d'images comporte des moyens de téléchargement, à partir de la mémoire 112 de la caméra 110, d'une séquence d'images Im.

Dans le mode préféré de réalisation décrit ici, ces moyens de téléchargement comportent des moyens logiciels et matériels de communication connus de l'homme du métier et installés dans l'unité de stockage 200, à savoir notamment :
- une carte réseau 210 accompagnée de ces pilotes ;
- des moyens de mise en oeuvre d'un protocole de communication standard de type TCP/IP, Ethernet, Firewire ou autre.

Préférentiellement, ces moyens de téléchargement comportent un support physique 220 constitué par une fibre optique ou un câble Ethernet RJ45.

Dans le mode préféré de réalisation décrit ici, un tel câble Ethernet peut notamment être branché directement sur une sortie 113 de la caméra 110.

Lorsque l'unité de stockage 200 est très éloignée de la caméra 110, le dispositif 10 de traitement d'images comporte en outre un module 300 d'extension, du type de celui commercialisé par la Société TETRADIS sous la référence « Gigabit Extender».

De façon connue de l'homme du métier, un tel module 300 d'extension, ce connecte sur la sortie 113 de la caméra 110 et permet de transporter des données au format Gigabit Ethernet sur de la fibre optique durcie de type « multi mode 62,5-125 » sur une distance d'environ deux mille mètres.

Dans le mode préféré de réalisation décrit ici, le dispositif 10 de traitement d'images comporte des moyens distants de contrôle du dispositif 100 d'acquisition d'images, et plus précisément :
- des moyens 410 de visualisation, au format PAL, des images acquises par la caméra 110 ; et
- un canal 420 de communication audio avec le caméraman OP1 situé à proximité de cette caméra.

Ces moyens distants de contrôle sont optionnels.

Par ailleurs, dans le mode préféré de réalisation décrit ici, le dispositif 10 de traitement d'images comporte des moyens de commande du dispositif 100 d'acquisition d'images, et plus précisément :
- des moyens 430 pour commencer, arrêter, suspendre ou reprendre l'acquisition desdites images ; et
- des moyens 440 de contrôle de l'ouverture du diaphragme de ladite caméra.

Dans le mode préféré de réalisation décrit en référence à la figure 1, les différents signaux de contrôle et de commande associés aux moyens distants de contrôle et de commande précités, sont multiplexés sur une deuxième fibre optique 221, préférentiellement dans la même gaine de protection que la première fibre optique 220.

Dans le mode préféré de réalisation décrit ici, les signaux transitant sur cette deuxième fibre optique 221 sont :
- un signal 411 transportant l'image acquise, au format PAL, par la caméra 110 ;
- un signal 431 utilisé pour commencer, arrêter, suspendre ou reprendre l'acquisition des images par la caméra 110 ;
- un signal 441 pour contrôler l'ouverture du diaphragme de la caméra 110 ; et
- le canal de communication 420 établi entre le caméraman OP1 situé à proximité de la caméra 110 et l'opérateur OP2 situé à proximité de l'unité de stockage 200.

A cet effet, le dispositif de traitement d'images 10 comporte deux multiplexeurs 500 à l'entrée et à la sortie de cette deuxième fibre optique 221, tels que représentés à la figure 1. Le multiplexage de signaux étant connu de l'homme du métier, il ne sera pas décrit ici.

Préférentiellement, l'unité de stockage 200 selon l'invention comporte une carte vidéo 230 adaptée à convertir les fichiers informatiques F de la séquence d'images Im acquises par la caméra 110 en données au format DVI.

Dans le mode préféré de réalisation décrit ici, on utilise la carte graphique "commercialisée par la société MATROX, sous la référence « Matrox Parhélia 256 Mo», cette carte étant connectée à un bus PCI de l'ordinateur personnel 200 constituant l'unité de stockage 200.

Préférentiellement, le dispositif 10 de traitement conforme à l'invention comporte un convertisseur 600 adapté à obtenir, à partir de l'unité de stockage 200, les données au format DVI précitées, et à les convertir en données au format SDI ou HD.

Dans le mode préféré de réalisation décrit ici, ce convertisseur 600 est constitué par le convertisseur commercialisé par la société MIRANDA TECHNOLOGIES sous la référence « DVI-Ramp ». Ce convertisseur est adapté à convertir les données précitées dans un signal conforme à la norme SDI 4.2.2 SMPTE/CCIR 601 Digital.

Dans une variante préférée de réalisation de l'invention, le dispositif 10 de traitement d'images selon l'invention comporte en outre des moyens 700 de correction de la colorimétrie d'images.

Dans le mode préféré de réalisation décrit ici, les moyens 700 de correction de colorimétrie sont fournis par le convertisseur « DVI-Ramp » 600.

Conformément à l'invention, le dispositif 1 de diffusion d'images comporte aussi des moyens 20 de diffusion desdites au format SDI ou HD.

Dans le mode préféré de réalisation décrit ici, ces moyens 20 de diffusion sont constitués par des moyens de diffusion par satellite.

En variante, ils pourraient notamment être constitués par des moyens de diffusion terrestre ou câblés.

Dans le mode préféré de réalisation décrit ici, le dispositif de diffusion 1 comporte également un serveur vidéo 30 pour l'archivage des données au format SDI ou HD, et leur relecture à vitesse variable.

Un serveur vidéo à disque dur de type EVS ou BLT peut notamment être utilisé à cet effet. Un tel serveur permet en particulier la relecture d'un signal SDI ou HD simultanément à son enregistrement, et ce à des vitesses pouvant varier de 0 à 400%

Le dispositif de traitement d'images décrit ici permet ainsi de créer des ralentis comportant 500 images par secondes de qualité « broadcast » ou haute définition (HD), et la diffusion ces images immédiatement après acquisition, ce qui est compatible avec les exigences du contrôle vidéo en temps réel pour l'arbitrage dans une manifestation sportive.

La figure 2 représente, l'adaptateur 140 utilisé entre l'objectif à focale variable 120 et la caméra 110 décrits brièvement ci-dessus.

Dans le mode de réalisation décrit ici, l'adaptateur 140 comporte une partie optique 150 et une partie mécanique 160. Sur la figure 2, ces différentes parties ont représentées séparées.

La partie optique 150 comporte un corps 153 muni, à une première extrémité d'une monture B4 femelle 151 adaptée à coopérer avec la monture B4 mâle 121 de l'objectif à focale variable 120.

Le corps 153 de la partie optique 150 comporte, à sa deuxième extrémité, une monture B4 mâle 154, adaptée à coopérer avec une monture B4 femelle 161 de la partie mécanique 160.

Cette monture B4 femelle 161, de huit millimètres d'épaisseur, est similaire à la monture B4 femelle 151 de la partie optique 150.

L'image issue de l'objectif à focale variable 120 et entrant par la première extrémité de la partie optique 150 est une image au format onze millimètres de diagonale.

La partie optique 150 est conçue pour étendre cette image de manière à former une image de vingt-deux millimètres de diagonale à la deuxième extrémité de la partie optique 150.

A cet effet, la partie optique 150 comporte, un support 156 pour une série de sept lentilles référencées L1 à L7 sur le schéma de la figure 2.

Ces sept lentilles, alignées sur l'axe optique H sont respectivement :
- L1 : ménisque convergent
- L2 : lentille biconvexe
- L3 : lentille biconcave
- L4 : lentille biconvexe
- L5 : lentille plan concave
- L6 :lentille plan-convexe
- L7 : lentille bi-concave

Cette partie optique 150 est caractérisée par un « back-focus » de 48 millimètres.

L'homme du métier comprendra que la partie mécanique 160 de l'adaptateur 140 est adaptée à permettre l'obtention d'une image nette sur le capteur de la caméra 110 de type CMOS, en prenant en compte le « back-focus » de la partie optique 150.

A cet effet, la partie mécanique 160 comporte, dans le prolongement de la monture B4 femelle 161, un cylindre 155 de quarante-trois millimètres de diamètre et de vingt-sept millimètres de long.

Ce cylindre 155 se prolonge à son autre extrémité par plaque 156 de cinq millimètres d'épaisseur. Cette plaque 156 comporte quatre trous 157 qui permettent, de façon connue, la fixation de la partie mécanique 160 sur la caméra 110.

Conformément à ce mode préféré de réalisation, lorsque la caméra 110 est fixée à la partie mécanique 160 de l'adaptateur 140, le capteur CMOS se trouve à huit millimètres de la surface externe 158 de la partie mécanique.

## Revendications

1. Dispositif d'acquisition d'images comportant :
- une caméra (110) ;
- un objectif à focale variable (120) ; et
- des moyens (130) de commande, pour faire varier ladite focale, motorisés, déportés, et accessibles au caméraman (OP1) manipulant ladite caméra (110) ;
**caractérisé en ce que** ladite caméra (110) est une caméra de type CMOS, adaptée à acquérir, lesdites images à une vitesse supérieure à soixante-quinze images par seconde.

2. Dispositif d'acquisition selon la revendication 1, **caractérisé en ce qu'**il comporte en outre des moyens (140) d'adaptation optique et mécanique entre ledit objectif (120) et ladite caméra (110).

3. Dispositif de traitement d'images **caractérisé en ce qu'**il comporte :
- un dispositif d'acquisition (100) selon la revendication 1 ou 2 ; et
- des moyens de téléchargement, à partir de ladite caméra (110), de fichiers correspondant à une séquence d'images acquises par ladite caméra (110), vers une unité (200) de stockage.

4. Dispositif de traitement d'images selon la revendication 3, **caractérisé en ce que** les dits moyens de téléchargement comportent une fibre optique ou un câble de type RJ45 (220).

5. Dispositif de traitement d'images selon la revendication 3 ou 4, **caractérisé en ce qu'**il comporte des moyens distants de contrôle et/ou de commande dudit dispositif d'acquisition d'images (100), depuis ladite unité de stockage (200).

6. Dispositif de traitement selon la revendication 5, **caractérisé en ce que** lesdits moyens distants de contrôle comportent au moins un élément choisi parmi :
- des moyens (410) de visualisation desdites images au format PAL ; et
- un canal de communication audio (420) pour le caméraman (OP1) situé à proximité de ladite caméra.

7. Dispositif de traitement d'images selon la revendication 5 ou 6, **caractérisé en ce que** lesdits moyens distants de commande comportent au moins un élément choisi parmi :
- des moyens (430) pour commencer, arrêter, suspendre ou reprendre l'acquisition desdites images à distance; et
- des moyens (440) de contrôle de l'ouverture du diaphragme de ladite caméra.

8. Dispositif de traitement d'images selon l'une quelconque des revendications 3 à 7, **caractérisée en ce que** ladite unité de stockage (200) comporte des moyens (230, 600) adaptés à convertir lesdits fichiers en données conforme à un format standard, et notamment au format DVI, HD, SDI ou PAL.

9. Dispositif de traitement d'images selon la revendication 8, **caractérisé en ce que** lesdits moyens de conversion sont constitués par :
- une carte vidéo (230) pour convertir lesdits fichiers en données au format DVI ;et
- un convertisseur (600) pour convertir lesdites données au format DVI dans le format SDI ou HD.

10. Dispositif de traitement d'images selon l'une quelconque des revendications 3 à 9, **caractérisé en ce qu'**il comporte en outre des moyens (700) de correction de colorimétrie.

11. Dispositif de diffusion d'images **caractérisé en ce qu'** il comporte :
- un dispositif de traitement d'images (10) selon l'une quelconque des revendications 8 à 10 ; et
- des moyens (20) de diffusion desdites données au format SDI ou HD.

12. Dispositif de diffusion d'images selon la revendication 11, **caractérisé en ce qu'**il comporte en outre un serveur vidéo (30) pour l'archivage desdites données au format SDI ou HD, et leur relecture, préférentiellement à vitesse variable.

13. Utilisation d'un dispositif de traitement d'images (10) selon l'une quelconque des revendications 3 à 10, pour créer des ralentis de plus de soixante-quinze image par seconde, et notamment à 500 images par seconde.

14. Utilisation d'un dispositif de diffusion d'images (1) selon la revendication 11 ou 12 pour diffuser des ralentis de plus de soixante-quinze images par seconde, et notamment à 500 images par seconde, dans les conditions du direct, et préférentiellement immédiatement après leur acquisition.

15. Utilisation d'un dispositif de diffusion d'images (1) selon la revendication 14, pour le contrôle vidéo en temps réel au support de l'arbitrage dans une manifestation sportive.
